# EUROPEAN PATENT SPECIFICATION

(11) **EP 2 830 879 B1**
(45) Date of publication and mention of the grant of the patent: **31.10.2018**
(21) Application number: 12873260.9
(22) Date of filing: 29.03.2012
(51) Int. Cl.: B32B 27/20, B29C 47/06, B32B 27/08, B29C 47/00, B29K 511/10, B29K 311/10, B29K 401/00, B29K 601/00, E04C 2/22, B32B 5/16

(54) **NATURAL FIBER PLASTIC COMPOSITE**
NATURFASER-KUNSTSTOFF-VERBUND
COMPOSITE EN PLASTIQUE À FIBRES NATURELLES

(43) Date of publication of application: 04.02.2015
(73) Proprietor: UPM-Kymmene Corporation, 00100 Helsinki (FI)
(72) Inventor: PELTOLA, Piia, FI-13100 Hämeenlinna (FI); LEHTINEN, Liisa, FI-15610 Lahti (FI); KUITUNEN, Markku, FI-15950 Lahti (FI)
(74) Representative: Berggren Oy, Tampere
(86) International application number: PCT/FI2012/050317
(87) International publication number: WO 2013/144421

(56) References cited:
- EP-A1- 0 668 142
- EP-A1- 1 250 995
- EP-A1- 2 182 138
- WO-A1-2006/049972
- WO-A1-2011/051546
- WO-A2-02/103113
- US-A1- 2003 021 915
- US-A1- 2003 154 662
- US-A1- 2003 154 662
- US-A1- 2011 206 931

## Description

### Field of the Invention

This invention relates to a natural fiber plastic composite product and a building and a terrace comprising a natural fiber plastic composite product. The invention further relates to a method for manufacturing a natural fiber plastic composite product. In addition, the invention relates to the use of a natural fiber plastic composite product and an arrangement comprising a fastener, a fastening member, a base element, and a natural fiber plastic composite product.

### Background of the Invention

Natural fiber plastic composite products typically comprise wood material, such as saw dust, and at least one kind of plastic polymer. The composite products may be used for several purposes, for example for furniture, deck floors, fences, window frames, and door frames.

WO02/103113A2 discloses cellulose-polymer composites wherein the cellulose component is thoroughly encapsulated by the polymer component, and having varying density which allows high strength over a wide range of temperatures and generally low weight. The composites are characterized as having a core layer comprising of 50-60 wt.% filler and a capstock with 10-30 wt.% filler.

WO2006/049972A1 discloses composite material including a natural fiber, such as wood flour, and a polymer resin, wherein the natural fiber has been pretreated with a bleaching or oxidizing agent.

US2003/154662A1 discloses a plank structure comprising a composite comprising a thermoplastic resin and a biofiber. The plank can be manufactured using a surface layer, protective coating, capstock layer on any surface, portion thereof on the exterior or interior of the plank. The coating, layer, or capstock can provide environmental stability, wear resistance, resistance to environmental moisture, stability to ultraviolet light or any other physical or chemical property that can tend to improve the wear ability or lifetime of any aspect of the deck plank structure.

### Summary of the Invention

The present invention discloses a method for manufacturing a natural fiber plastic composite product. The present invention further discloses a natural fiber plastic composite product, a building comprising a natural fiber plastic composite product, a terrace comprising a natural fiber plastic composite product, and the use of the natural fiber plastic composite product in a building or in a terrace. In addition, the present invention comprises an arrangement comprising a natural fiber plastic composite product, a base element and a fastener.

The present invention provides a natural fiber plastic composite product comprising a first layer and a second layer, the first layer forming at least a part of the surface of the product, wherein the product is obtained by using a co-extrusion process to form the first layer and the second layer of the product, and wherein
- the first layer comprises thermoplastic polymer and cellulose based particles in the form of fibers having a length of at least 0.1 mm, and
- the second layer comprises thermoplastic polymer, cellulose based particles and impurities originating from recycled material(s) and comprising lignin, print ink, silicone and adhesives,
wherein the amount of the impurities is at least 30 wt.% greater in the second layer of the product than in the first layer of the product, wherein the content of the lignin in the first layer calculated from the total amount of cellulose fibers is less than 15 wt.%

The amount of recycled raw materials and/or other raw materials of uneven quality may need to be increased in natural fiber plastic composite products due to environmental or economic reasons. However, it has been observed that the strength properties and/or the appearance of a manufactured product may become too poor if the product comprises too much said raw materials. Therefore, it may be difficult to use, for example, as much recycled raw materials as desired.

The natural fiber plastic composite product according to the present invention comprises a first layer and a second layer. The first layer comprises thermoplastic polymer and cellulose based particles, and the second layer comprises thermoplastic polymer and impurities. The impurities come from recycled raw materials.

The first layer forms at least a part of the surface of the product. In other words, the first layer covers the second layer at least partly. The amount of the impurities is at least 30 wt.% greater in the second layer of the product than in the first layer of the product. Preferably, the impurities consist of lignin(s), print ink(s), silicone(s) and/or adhesive(s).

The total amount of lignin is preferably smaller in the first layer of the product than in the second layer of the product. Alternatively or in addition, the total amount of print ink is smaller in the first layer of the product than in the second layer of the product. Alternatively or in addition, the total amount of silicone is smaller in the first layer of the product than in the second layer of the product. Alternatively or in addition, the total amount of adhesives is smaller in the first layer of the product than in the second layer of the product.

Thanks to the first layer covering at least a part of the second layer, the second layer may comprise lots of recycled material. For example, the second layer may comprise dark colored recycled material even if the manufactured product has a light color.

The method for manufacturing natural fiber plastic composite product comprises:
- using a co-extrusion process to form the first layer and the second layer of the product,
- forming the first layer of the product, the first layer comprising thermoplastic polymer material and cellulose fibers having a length of at least 0.1 mm, and
- forming the second layer of the product, wherein the second layer comprises thermoplastic polymer material, cellulose based particles and impurities originating from recycled material(s) and comprising lignin, print ink, silicone and adhesives,
wherein the content of the impurities is at least 30 wt.% greater in the second layer than in the first layer of the product, and the content of the lignin in the first layer calculated from the total amount of cellulose fibers is less than 15 wt.%.

According to examples the first layer and the second layer are formed in a lamination process, a gluing process, a molding process, an extrusion process, or a welding process.

In the present invention the first layer and the second layer are formed in a co-extrusion process. This process may be an effective way to manufacture the product comprising two layers with different raw materials. For example, the flow properties of raw materials may be separately controlled during the co-extrusion process.

In an example, the first layer and the second layer are first formed separately, for example in an injection molding process or in an extrusion process, after which the layers are attached to each other, for example, in a lamination process.

According to an advantageous embodiment of the invention, one of the dimensions of the composite product is at least 10 times greater than two other dimensions of the product.

Advantageously, the natural fiber plastic composite product is a building element, such as a decking board or a façade panel, or a landscaping element. In an example, the product is a railing, a fence, or a noise barrier. The natural fiber plastic composite product may also be a product that is used to cover the surface of another product, such as a cover strip.

Aspects of the invention are characterized by what is stated in the independent claims. Various embodiments of the invention are disclosed in the dependent claims.

### Description of the Drawings

In the following, the invention will be illustrated by drawings in which
- Figs 1a- 1e: show examples of a product, and
- Fig. 2: shows an example of an arrangement according to the present invention, and
- Fig. 3: shows an example of a method in reduced schematic chart.

### Detailed Description of the Invention

In the following disclosure, all percentages are by dry weight, if not indicated otherwise.

The following reference numbers are used in this application:
- 11: natural fiber plastic composite product, also called composite product,
- 12: first layer of the natural fiber plastic composite product,
- 12a: thickness of the first layer,
- 13: second layer of the natural fiber plastic composite product,
- 13a: thickness of the second layer,
- 14: hole in the natural fiber plastic composite product,
- 21: fastener,
- 21b: head of the fastener,
- 22: fastening member,
- 23: base element,
- 31: raw materials for the natural fiber plastic composite product, and
- 32: apparatus adapted to form the natural fiber plastic composite product.

In this application the term "first layer" 12 of the natural fiber plastic composite product 11 refers to a layer that forms at least a part of the surface area of the composite product 11. Advantageously, the first layer 12 is at least partly visible when the product 11 is in use. For example, in the case of a building element, the first layer 12 preferably forms the surface of a side that is visible in use. In the case of a decking board that forms a part of a floor, the first layer 12 advantageously covers at least the top side of said decking board.

The term "second layer" 13 of the natural fiber plastic composite product 11 refers to a layer that is at least partly covered by the first layer 12. In other words, the term "second layer" 13 of the natural fiber plastic composite product 11 refers to a layer that is at least partly "underneath" the first layer 12. Preferably, the second layer 13 is not visible when the product 11 is in use. However, in an example, the second layer is partly visible when the product 11 is in use.

The natural fiber plastic composite product 11 according to the present invention comprises two layers. It may also comprise more than two layers, for example, three, four, five, six, seven, eight, or even more than eight layers. Advantageously, the product 11 comprises two, three or four layers. In an example, there is at least one adhesive layer between the first layer and the second layer.

In this application, the term "cellulose based particles" refers to cellulose particles that can originate from any plant material that contains cellulose. The particles can be in the form of dust (powder); preferably they are, at least partly, in the form of fibers. In this application, the particles having a length of at least 0.1 mm, more preferably at least 0.2 mm are called fiber particles or fibers, and smaller particles than those mentioned above are called powder-particles or powder.

The natural fiber plastic composite may be, for example, a wood plastic composite, i.e. the cellulose based particles originate from wood. In an example, at least 30 wt.%, more preferably at least 80 wt.% and most preferably at least 90 wt.% of the cellulose based particles of the first and/or the second layer 13 are wood based particles.The wood material can be softwood trees, such as spruce, pine, fir, larch, douglas-fir or hemlock, or hardwood trees, such as birch, aspen, poplar, alder, eucalyptus, or acacia, or a mixture of softwoods and hardwoods. Non-wood material can be agricultural residues, grasses or other plant substances such as straw, leaves, bark, seeds, hulls, flowers, vegetables or fruits from cotton, corn, wheat, oat, rye, barley, rice, flax, hemp, manila hemp, sisal hemp, jute, ramie, kenaf, bagasse, bamboo, or reed. The cellulose based particles may be virgin or recycled.

Advantageously, the cellulose based particles in the first layer 12 of the product 11 comprise cellulose based particles that have a low lignin content. Advantageously, the cellulose based particles comprises chemically treated cellulose particles (i.e. so called lignin free cellulose particles). Alternatively or in addition, the cellulose based particles originate from plant material(s) in which the lignin content of the particles is naturally low.

The amount of the recycled raw materials as well as other raw materials of uneven quality and/or coloured raw materials may need to be increased in the composite product 11 due to environmental reasons and/or efficiency reasons. However, it has been observed that the amount of defects on the surface of the manufactured product 11 may increase with an addition of said raw materials and, therefore, the appearance and/or strength properties of the surface of the composite product 11 may decrease. Now, thanks to the novel composite product 11 comprising a first layer that covers at least a part of the surface of the product 11, it is possible to use a greater amount of recycled material and/or coloured material and/or material of uneven quality as raw material for the composite product 11 than in conventional products. Thus, the novel product 11 may be more environmentally friendly and/or more economical than conventional products.

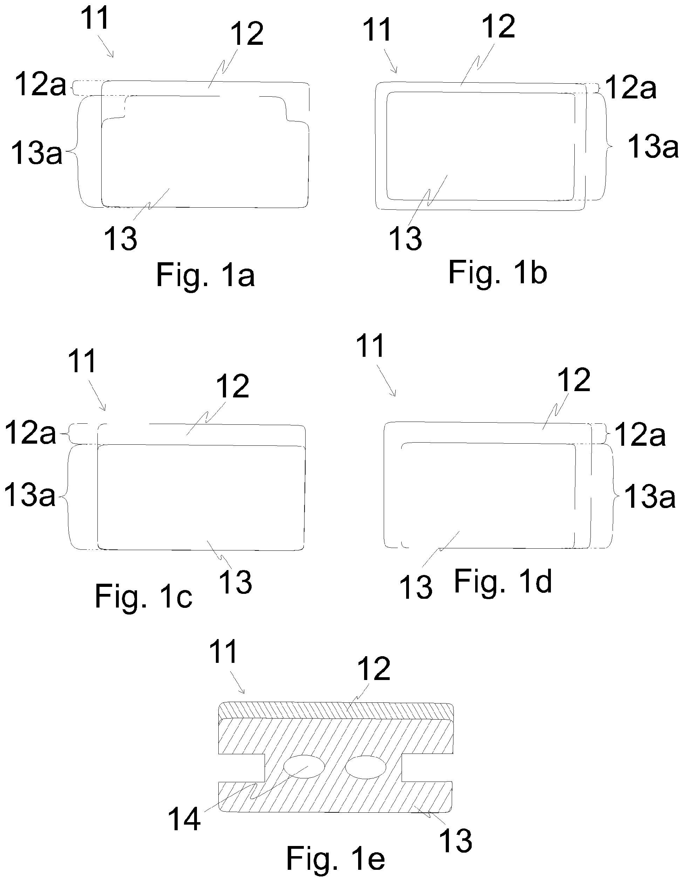

Figures 1a to 1e show some examples of the product 11 comprising the first layer 12 and the second layer 13. In Figures 1a to 1e, among other things, the thickness 12a of the first layer 12 and the thickness 13a of the second layer are illustrated. Figure 1e shows an example of a composite product 11 having holes 14.

The first layer 12 may form the entire surface area of the product 11. In this case, the first layer 12 covers the second layer 14 totally. Alternatively, only a part of the second layer 13 may be covered by the first layer 12.

Figures 1a and 1c show examples in which the first layer 12 covers one surface of the composite product 11. Figure 1b shows an example in which the first layer 12 covers at least four surfaces of the composite product 11 at least partly, preferably the whole surface area of the composite product 11. Figure 1d shows an example in which the first layer 12 covers at least three of the surfaces at least partly. Figure 1e shows an example of the end side of a building panel. The building panel shown in Figure 1e comprises two holes 14, but the number of the holes may vary. Preferably, the composite product comprises one, two, three, four, five or six holes 14. In another example, the composite product does not comprise any holes 14. Thus, the product 11 may be formed as a solid or hollow profile. The weight of the composite product 11 typically decreases due to the holes 14.

Advantageously, the first layer 12 of the composite product forms at least 50% or at least 60%, more preferably at least 70% or at least 80%, and most preferably at least 90% or at least 95% of the surface area of the composite product 11. Most advantageously, the first layer 12 of the composite product forms at least 60% or at least 70%, more preferably at least 80% or at least 90% and most preferably at least 95% or at least 99% of the surface area of the product 11 that is visible in use.

The thickness 12a of the first layer 12 of the composite product 11 is preferably at least 0.2 mm or at least 0.3 mm, more preferably at least 0.4 mm or at least 0.5 mm, and most preferably at least 0.6 mm or at least 0.7 mm. In addition, the thickness 12a of the first layer 12 of the composite product 11 is preferably not greater than 5 or 4 mm, more preferably not greater than 3 or 2.5 mm, and most preferably not greater than 2.0 or 1.5 mm. In an example, the thickness 12a of the first layer 12 is between 0.2 and 5 mm. The thickness 12a of the first layer 12 of the composite product 11 is preferably determined as the median thickness of the first layer. If the product 11 comprises a side that is visible when the product 11 is in use, the thickness 12a of the first layer 12 is preferably determined as the median thickness of that side of the product 11.

The thickness 13a of the second layer is preferably between 0.5 and 40 mm, more preferably between 1 and 20 mm, and most preferably between 3 and 10 mm. The thickness 13a of the second layer 13 is preferably calculated as the median thickness of the second layer.

The natural fiber plastic composite product 11 is advantageously a building element, such as a decking board or a façade panel. In the case of the decking board or the façade panel, the product may comprise holes 14, or the product may be a so called solid profile without any holes 14.

Advantageously, the length of the product 11 is at least 10 times, more preferably 50 or 100 times, and most preferably 200 times greater than the thickness of the product 11. Alternatively or in addition, the width of the product 11 is at least 2 times, more preferably at least 3 times, and most preferably at least 5 times greater than the thickness of the product 11.

The first layer 12 of the composite product 11 comprises cellulose based particles. Due to the cellulose based particles, the properties of the first layer may be improved. Advantageously, the amount of the cellulose particles in the first layer 12 of the product 11 is between 5 and 80 wt.%, or between 10 and 70 wt.%, more preferably between 15 and 60 wt.% or between 20 and 50 wt.%, and most preferably between 30 and 40 wt.%. The cellulose particles preferably comprise wood dust and/or mechanical pulp and/or chemical pulp, from which the chemical pulp in powder form or fiber form is preferably used, and chemical pulp in the form of fibers is most preferably used. Advantageously, at least 60 wt.%, preferably at least 70 wt.% or at least 80 wt.%, and most preferably at least 90 wt.% or at least 95 wt.% of the cellulose based particles in the first layer 12 of the product 11 are particles having a low lignin content, i.e. chemically treated cellulose particles and/or plant material in which the lignin content of the fibers is naturally low. Advantageously, the amount of the lignin in the first layer 12 of the product 11 calculated from the total amount of the cellulose based particles is lower than 15 wt.% or lower than 10 wt.%, more preferably lower than 5 wt.% or lower than 3 wt.%, and most preferably lower than 2 wt.% or lower than 1 wt.%.

Advantageously, the first layer 12 of the natural fiber plastic composite product 11 comprise thermoplastic polymer. Advantageously the total amount of the thermoplastic polymer(s) is from 20 to 80 wt.%, preferably from 20 to 60 wt.% of the first layer 12. The first layer 12 may comprise thermoplastic polymers that are virgin and/or recycled. Advantageously, the first layer 12 comprises virgin thermoplastic polymer(s). Preferably, the thermoplastic polymer comprises or consists of polyolefin, i.e. polypropylene (PP) and/or polyethylene (PE). If polyolefin is used, a low temperature may be used in the manufacturing process of the composite product 11; hence, darkening of the cellulose based particles may be avoided. Advantageously, at least 60 wt.% or at least 70 wt.%, more preferably at least 75 wt.% or at least 80 wt.% and most preferably at least 85 wt.% or at least 90 wt.% of the thermoplastic polymers used in the first layer 12 are polyolefins.

In an example, the thermoplastic polymer comprises polylactide (PLA). In this case, the total amount of the polylactides is advantageously at least 30 wt.% or at least 40 wt.%, more preferably at least 50 wt.% or at least 60 wt.% and most preferably at least 70 wt.% or at least 80 wt.% of the thermoplastic polymers in the first layer 12.

In an example, the first layer and/or the second layer of the product 11 comprises polyvinyl chloride (PVC). In this case, the total amount of the PVC:s in said layer is advantageously at least 10 wt.%, more preferably at least 30 wt.%, and most preferably at least 50 wt.% of plastic polymers in said first layer.

The first layer 12 may comprise mineral fillers. The mineral filler preferably comprises kaolin clay, wollastonite, ground calcium carbonate, precipitated calcium carbonate, titanium dioxide, talcum, or a mixture consisting two, three, four, five or six of said mineral fillers. Most preferably, the mineral filler in the first layer 12 comprises or consists of talcum.

Advantageously, the first layer 12 comprises from 20 to 80 wt.% thermoplastic polymers, from 5 to 80 wt.% cellulose based particles, and from 0 to 20 wt.% mineral fillers, the total content of said materials forming at least 90 wt.%, more preferably at least 95 wt.% and most preferably at least 97 wt.% of the first layer 12. In addition, the first layer 12 may comprise, for example, additives, such as colorants, UV stabilizers, coupling agents, foaming agents (blowing agents) and/or lubricants.

At least in the case of polyolefin, the composite product 11 preferably comprises coupling agent(s). The coupling agent may comprise, for example,
- maleic anhydride functionalized HDPE,
- maleic anhydride functionalize LDPE,
- maleic anhydride functionalized EP copolymers,
- acrylic acid functionalized PP, HDPE, LDPE, LLDPE, and EP copolymers,
- styrene/maleic anhydride copolymers,
- vinyl trialkoxy silanes, or
- combinations thereof.

The second layer 13 that is at least partly covered by the first layer 12 may comprise, for example, recycled material(s) comprising different colours. Due to the first layer 12, the composite product 11 may be weatherproof, it may have good strength properties, and there may not be any defects on the surface of the product 11; even the raw materials of the second layer 13 may vary from time to time.

The second layer 13 of the composite product 11 comprises cellulose based particles. The cellulose particles of the second layer preferably comprise wood dust, and/or mechanical pulp, and/or chemical pulp (powder and/or fibers) and/or recycled paper and/or recycled label material, from which the wood dust, mechanical pulp, recycled paper and/or recycled label material are preferably used. The amount of the cellulose based particles in the second layer is preferably between 20 and 80 wt.%, from which preferably at least 60 wt.%, more preferably at least 70 wt.% and most preferably at least 80 wt.% comes from recycled paper and/or recycled label material and/or wood dust and/or mechanical pulp.

In an example, the recycled label material used in the second layer 13 of the composite product 12 comprises:
- coated and/or uncoated papers, comprising cellulose based particles and possible pigments, the total amount of the papers being, for example, at least 20 wt.%, and/or
- water-based acrylic polymer adhesives, hotmelt adhesives, and/or rubber adhesives, the total amount of the adhesives being, for example, 20 wt.% at the most, and/or
- silicone release agents, the total amount being, for example, 5 wt.% at the most, and/or
- Plastic film(s), for example, polyethylene (PE), polypropylene (PP), polystyrene (PS) and/or polyethylene terephthalate (PET), the total amount of the plastic films being, for example, 80 wt.% at the most, and/or
- talcum, the total amount being, for example, 20 wt.% at the most,
the total amount of the above mentioned materials in the recycled label material being 100 wt.% at the most.

Advantageously, the second layer 13 of the natural fiber plastic composite product 11 comprises from 20 to 80 wt.% (dry weight) plastic polymers, preferably thermoplastic polymers. Advantageously, the total amount of the thermoplastic polymers is from 20 to 60 % of dry weight. Advantageously, the total amount of the polyolefin is at least 60 wt.% or at least 70 wt.%, more preferably at least 75 wt.% or at least 80 wt.%, and most preferably at least 85 wt.% or at least 90 wt.% of the thermoplastic polymers used in the second layer 13.

The second layer 13 may comprise plastic polymers that are virgin and/or recycled. Preferably at least 50 wt.%, more preferably at least 60 wt.% of the plastic polymers in the second layer 13 are recycled. It is also possible to use only recycled plastic polymers in the second layer 13. Advantageously, the second layer 13 comprises at least one kind of recycled plastic polymer, more preferably the second layer 13 comprises at least two kinds of recycled plastic polymers. In an example, the recycled plastic polymer comprises PE and/or PP and/or PVC.

The second layer 13 may comprise a mineral filler. The mineral filler preferably comprises kaolin clay, ground calcium carbonate, precipitated calcium carbonate, titanium dioxide, wollastonite, talcum, or a mixture of these. In an example, at least 30 wt.% or at least 50 wt.% of the mineral fillers of the second layers 13 originates from recycled raw materials, such as recycled uncoated and/or coated paper, paperboard and/or board material. However, advantageously at least 60 wt.%, more preferably at least 80 wt.% of the mineral fillers are supplied to the system as separated raw material(s), i.e. not as a part of recycled paper, paperboard or board material.

In addition to those mentioned above, the second layer 13 may comprise, for example, additives, such as colorants, UV stabilizers, coupling agents, foaming agents (blowing agents) and lubricants.

The second layer 13 comprises so called impurities originating from the recycled material(s). The amount of the impurities is at least 30 wt.% greater in the second layer 13 of the product 11 than in the first layer 12 of the product 11.

The impurities comprise or consist of lignin, print ink, silicone, and adhesives. Mechanically treated cellulose based particles typically comprise lignin impurities. Lignin may bind particles together in the second layer. However, it is not wanted in the surface of the product because it may cause problems on the surface of the composite product 11, such as yellowing of the surface.

The second layer preferably comprises cellulose based particles that are mechanically treated. The mechanically treated cellulose based particles may be, for example, ground, refined and/or powdered from the cellulose source used. In other words, the cellulose source of the cellulose based particles is advantageously mechanically treated but not chemically treated. Some examples of mechanically treated cellulose based particles are wood dust, mechanical pulp, and recycled paper, which typically comprises lignin. Chemical pulp is so called lignin free material, which is chemically treated. In addition, recycled label material typically comprises chemically treated cellulose based particles.

The impurities of the natural fiber plastic composite product comprise lignin. Preferably, the lignin, at least in the second layer 13, is at least predominantly in the cellulose based particles, the "predominantly" meaning at least 50 wt.%, more preferably at least 70 wt.%, and most preferably at least 90 wt.%. Most advantageously, the cellulose based particles in the second layer (13) that comprise the lignin are in a form of wood dust and/or mechanical pulp.

The appearance of the composite product 11 may be good due to the first layer 12 in spite of the impurities, such as lignin, in the second layer 13 of the composite product 11. The total amount of the impurities, preferably the total amount of lignin, print ink, silicone and adhesives, is at least 30 wt.% or at least 45 wt.%, more preferably at least 60 wt.% or at least 75 wt.%, and most preferably at least 85 wt.% or at least 90 wt.% greater in the second layer 13 of the product 11 than in the first layer 12 of the product 11.

Advantageously, the total amount of the lignin(s), print ink(s), silicone(s) and adhesive(s) in the second layer 12 of the composite product 11 is at least 1.3 or 1.7 or 2 times the total amount of the lignin(s), print ink(s), silicone(s) and adhesive(s) in the first layer 13 of the composite product 11, more advantageously at least 5, 10 or 20 times the total amount of the lignin(s), print ink(s), silicone(s) and adhesive(s) in the first layer 13 of the composite product 11 and most advantageously at least 50, 80 or 100 times the total amount of the lignin(s), print ink(s), silicone(s) and adhesive(s) in the first layer 13 of the composite product 11.

The first layer 12 preferably comprises less than 5 wt.% or less than 3 wt.%, more preferably less than 2 wt.% or less than 1 wt.% and most preferably less than 0.5 wt.% of impurities. Most preferably, the first layer 12 comprises less than 5 wt.% or less than 3 wt.%, more preferably less than 2 wt.% or less than 1 wt.% and most preferably less than 0.5 wt.% of materials that consist of lignin, print ink, silicone and adhesives. Most advantageously, the first layer 12 comprises less than 5 wt.% or less than 3 wt.%, more preferably less than 2 wt.% or less than 1 wt.% and most preferably less than 0.5 wt.% of lignin.

Advantageously, the second layer 13 comprises at least 1 wt.%, more preferably at least 2 wt.% and most preferably at least 3 wt.% lignin.

Thanks to the small amount of the impurities in the first layer 12, and the thermoplastic polymer and the cellulose particles therein, the surface of the product 11 may have good strength properties together with a good appearance even if the product 11 comprises a significant amount of impurities in the second layer 13 of the product 11.

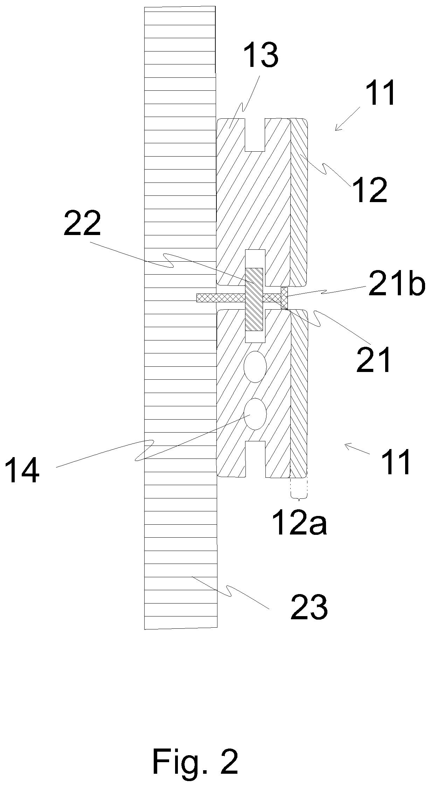

Figure 2 shows an example of an arrangement according to the present invention. In figure 2 the composite product 11, the first layer 12, a thickness 12a of the first layer, the second layer 13, a hole 14 of the product 11, a fastener 21, a head 21b of the fastener, a fastening member 22, and a base element 23 are shown.

Preferably, the composite product 11 has a structure that is compatible with the fastening member 22 in order to achieve good fastening of the composite product 11 to the base element 23. There may be some thermal expansion in the composite product 11 in use that needs to be taken into account.

According to an example, the composite product is a decking board or a façade panel and the structure of the composite product 11 is such that a fastening member 22, preferably a so called T-clip manufactured by UPM Corporation, can be used with the composite product 11. The fastening member 22 may be used in order to fasten the manufactured composite product, preferably together with a fastener 21, such as a screw or a nail. The fastener 21 may also be used without the fastening member 22. In an example, the composite product comprises elongated holes that are used for the fasteners 21, for example a screw or a nail. Thanks to the elongated holes, thermal expansion of the composite product is allowed. In another example, the fastening of implemented by so called support rail fastening member, such as an alu rail fastening member.

Advantageously, the product 11 is installed in such a way that the first layer 12 forms the surface of the product 11 that is visible. Advantageously, the natural fiber plastic composite product 11 is fastened in order to form a part of the building. In an example, the natural fiber plastic composite is fastened in order to form a part of the terrace.

In an advantageous example, the fastener 21 comprises a head 21b. In this case, the fastener may be, for example, a screw or a nail, preferably the screw. Advantageously the head 21b of the screw 21 is parallel with the surface of the product 11 as is shown in Figure 2. Advantageously, the fastener 21 is used together with a fastening member 22 to fasten the composite product 11 to the base element 23. The fastening member may have, for example, a T-profile.

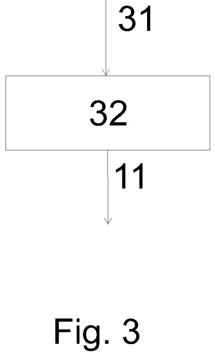

Figure 3 shows an example in a reduced schematic chart. Figure 3 shows raw material 31 for the natural fiber plastic composite product 11, an apparatus 32 adapted to form the natural fiber plastic composite product 11, and a natural fiber plastic composite product 11.

The system according to an example preferably comprises at least one supplying device to feed the raw materials 31 to the apparatus 32, which apparatus 32 forms the natural fiber plastic composite product 11.

The first layer 12 and the second layer 13 are formed by a co-extrusion process using an extruder. The apparatus 32 comprises the extruder.

In an example, the product 11 is manufactured in a moulding process, such as an injection moulding process, or in a lamination process, a gluing process, a molding process, or a welding process.

In an example, the layers are first formed separately, for example in a molding process or in an extrusion process, after which the formed layers are attached to each other, for example, in a lamination process. In other words, the first layer 12 and the second layer 13 may be laminated with each other in order to form the product 11. In this case, the apparatus 32 comprises a laminating device.

A person skilled in the art readily understands different embodiments of the invention. Therefore, it is obvious that the present invention is not limited solely to the above-presented embodiments, but it can be modified within the scope of the appended claims.

## Claims

1. A natural fiber plastic composite product (11) comprising a first layer (12) and a second layer (13), the first layer (12) forming at least a part of the surface of the product (11), wherein the product is obtained by using a co-extrusion process to form the first layer (12) and the second layer (13) of the product (11), and wherein
- the first layer (12) comprises thermoplastic polymer and cellulose based particles in the form of fibers having a length of at least 0.1 mm,
- the second layer (13) comprises thermoplastic polymer and cellulose based particles, **characterized in that** the second layer (13) further comprises impurities originating from recycled material(s) and comprising lignin, print ink, silicone and adhesives,
wherein the amount of the impurities is at least 30 wt.% greater in the second layer (13) of the product (11) than in the first layer (12) of the product (11), wherein the content of the lignin in the first layer (12) calculated from the total amount of cellulose fibers is less than 15 wt.%

2. The natural fiber plastic composite product according to claim 1, wherein second layer comprises at least 1 wt.%, more preferably at least 2 wt.% and most preferably at least 3 wt.% lignin.

3. The natural fiber plastic composite product according to claim 1 or 2, wherein the first layer (12) comprises less than 5 wt.% of impurities.

4. The natural fiber plastic composite product according to any of the preceding claims, wherein the impurities consist of lignin(s), print ink(s), silicone(s) and adhesive(s).

5. The natural fiber plastic composite product according to any of the preceding claims, wherein the cellulose based particles in the second layer (13) comprise wood dust and/or mechanical pulp.

6. The natural fiber plastic composite product according to any of the preceding claims, wherein the content of lignin in the first layer (12) is lower than 3 wt.%.

7. The natural fiber plastic composite product according to any of the preceding claims, wherein the first layer (12) comprises from 20 to 80 wt.% of thermoplastic polymers, from 5 to 80 wt.% of cellulose based particles, and from 0 to 20 wt.% of mineral fillers, the total content of said materials being at least 90 wt.% of the first layer (12).

8. The natural fiber plastic composite product according to any of the preceding claims, wherein the first layer comprises talcum.

9. The natural fiber plastic composite product according to any of the preceding claims, wherein at least 90 wt.% of the cellulose based particles in the first layer (12) are chemically treated particles.

10. The natural fiber plastic composite product according to any of the preceding claims, wherein at least 30 wt.% of the cellulose based particles in the first layer (12) are wood particles.

11. The natural fiber plastic composite product according to any of the preceding claims, wherein the thickness (12a) of the first layer (12) is between 0.3 and 5 mm.

12. The natural fiber plastic composite product according to any of the preceding claims, wherein the thickness (13a) of the second layer (13) is between 0.5 and 40 mm.

13. The natural fiber plastic composite product according to any of the preceding claims, wherein the thermoplastic polymer comprises polyolefin.

14. The natural fiber plastic composite product according to any of the preceding claims, wherein the length of the product (11) is at least 10 times greater than the thickness of the product (11).

15. The natural fiber plastic composite product according to any of the preceding claims, wherein the product (11) is a building element, such as a decking board or a façade panel; a railing or a fence; a cover strip; or a noise barrier.

16. The natural fiber plastic composite product according to any of the preceding claims, wherein the content of lignin in the first layer (12) is lower than 1 wt.% and the content of the lignin in the second layer (13) is at least 3 wt.%.

17. A method for manufacturing a natural fiber plastic composite product comprising a first layer (12) and a second layer (13), the first layer (12) forming at least a part of the surface of the product (11), wherein the method comprises:
- using a co-extrusion process to form the first layer (12) and the second layer (13) of the product (11),
- forming the first layer (12) of the product (11), the first layer (12) comprising thermoplastic polymer material and cellulose fibers having a length of at least 0.1 mm, and
- forming the second layer (13) of the product (11), wherein the second layer (13) comprises thermoplastic polymer material and cellulose based particles, **characterized in that** the second layer (13) further comprises impurities originating from recycled material(s) and comprising lignin, print ink, silicone and adhesives,
wherein the content of the impurities is at least 30 wt.% greater in the second layer (13) than in the first layer (12) of the product (11), and the content of the lignin in the first layer (12) calculated from the total amount of cellulose fibers is less than 15 wt.%.

18. The method of claim 17, wherein the second layer comprises at least 1 wt.%, more preferably at least 2 wt.% and most preferably at least 3 wt.% lignin.

19. The method of claim 17 or 18, wherein the content of lignin in the first layer (12) is lower than 1 wt.% and the content of the lignin in the second layer (13) is at least 3 wt.%.

20. Use of the natural fiber plastic composite product according to any of the preceding claims 1 to 16 in a terrace or a building.

21. A building comprising the natural fiber plastic composite product (11) according to any of the preceding claims 1 to 16, and a fastener (21), wherein the natural fiber plastic composite is fastened by the fastener (21) in order to form a part of the building.

22. A terrace comprising the natural fiber plastic composite product (11) according to any of the preceding claims 1 to 16, and a fastener (21), wherein the natural fiber plastic composite is fastened by the fastener (21) in order to form a part of the terrace.

23. An arrangement comprising the natural fiber plastic composite product (11) according to any of the preceding claims 1 to 16, a fastener (21), a fastening member (22), and a base element (23), wherein the natural fiber plastic composite product (11) is fastened to the base element (23) by the fastening member (22) and the fastener (21), wherein the fastener (21) comprises a head (21b), and the head (21b) is parallel with a surface of the product (11).

## Patentansprüche

1. Naturfaser/Kunststoff-Verbundprodukt (11), das eine erste Schicht (12) und eine zweite Schicht (13) umfasst, wobei die erste Schicht (12) mindestens eine Teil der Oberfläche des Produkts (11) bildet, wobei das Produkt erhalten wird, indem ein Koextrusionsverfahren zur Anwendung gebracht wird, um die erste Schicht (12) und die zweite Schicht (13) des Produkts (11) zu bilden, und wobei
- die erste Schicht (12) ein thermoplastisches Polymer umfasst sowie Partikel auf Cellulosebasis in Form von Fasern, die eine Länge von mindestens 0,1 mm haben.
- die zweite Schicht (13) ein thermoplastisches Polymer umfasst sowie Partikel auf Cellulosebasis, **dadurch gekennzeichnet, dass** die zweite Schicht (13) weiterhin Verunreinigungen umfasst, die aus wiederverwertetem/wiederverwerteten Material(ien) stammen und Lignin, Druckfarbe, Silikon und Klebstoffe umfassen,
wobei die Menge der Verunreinigungen in der zweiten Schicht (13) des Produkts (11) um mindestens 30 Gew.-% größer als in der ersten Schicht (12) des Produkts (11) ist, wobei der Gehalt des Lignins in der ersten Schicht (12) weniger als 15 Gew.-% beträgt, wenn die Berechnung ausgehend von der Gesamtmenge an Cellulosefasern erfolgt.

2. Naturfaser/Kunststoff-Verbundprodukt gemäß Anspruch 1, wobei die zweite Schicht mindestens 1 Gew.-%, insbesondere mindestens 2 Gew.-% und mit dem größten Vorzug mindestens 3 Gew.-% an Lignin umfasst.

3. Naturfaser/Kunststoff-Verbundprodukt gemäß Anspruch 1 oder 2, wobei die erste Schicht (12) weniger als 5 Gew.-% an Verunreinigungen umfasst.

4. Naturfaser/Kunststoff-Verbundprodukt gemäß beliebigen der vorhergehenden Ansprüche, wobei die Verunreinigungen aus Lignin(en), Druckfarbe(n), Silikon(en) und Klebstoff(en) bestehen.

5. Naturfaser/Kunststoff-Verbundprodukt gemäß beliebigen der vorhergehenden Ansprüche, wobei die Partikel auf Cellulosebasis in der zweiten Schicht (13) Sägemehl und/oder Holzstoff umfassen.

6. Naturfaser/Kunststoff-Verbundprodukt gemäß beliebigen der vorhergehenden Ansprüche, wobei der Gehalt an Lignin in der ersten Schicht (12) geringer als 3 Gew.-% ist.

7. Naturfaser/Kunststoff-Verbundprodukt gemäß beliebigen der vorhergehenden Ansprüche, wobei die erste Schicht (12) 20 bis 80 Gew.-% an thermoplastischen Polymeren, 5 bis 80 Gew.-% an Partikeln auf Cellulosebasis und 0 bis 20 Gew.-% an mineralischen Füllstoffen umfasst, wobei der Gesamtgehalt an diesen Materialien mindestens 90 Gew.-% der ersten Schicht (12) ausmacht.

8. Naturfaser/Kunststoff-Verbundprodukt gemäß beliebigen der vorhergehenden Ansprüche, wobei die erste Schicht Talk umfasst.

9. Naturfaser/Kunststoff-Verbundprodukt gemäß beliebigen der vorhergehenden Ansprüche, wobei es sich bei mindestens 90 Gew.-% der Partikel auf Cellulosebasis in der ersten Schicht (12) um chemisch behandelte Partikel handelt.

10. Naturfaser/Kunststoff-Verbundprodukt gemäß beliebigen der vorhergehenden Ansprüche, wobei es sich bei mindestens 30 Gew.-% der Partikel auf Cellulosebasis in der ersten Schicht (12) um Holzpartikel handelt.

11. Naturfaser/Kunststoff-Verbundprodukt gemäß beliebigen der vorhergehenden Ansprüche, wobei die Dicke (12a) der ersten Schicht (12) 0,3 bis 5 mm beträgt.

12. Naturfaser/Kunststoff-Verbundprodukt gemäß beliebigen der vorhergehenden Ansprüche, wobei die Dicke (13a) der zweiten Schicht (13) 0,5 bis 40 mm beträgt.

13. Naturfaser/Kunststoff-Verbundprodukt gemäß beliebigen der vorhergehenden Ansprüche, wobei das thermoplastische Polymer Polyolefin umfasst.

14. Naturfaser/Kunststoff-Verbundprodukt gemäß beliebigen der vorhergehenden Ansprüche, wobei die Länge des Produkts (11) mindestens 10-mal größer als die Dicke des Produkts (11) ist.

15. Naturfaser/Kunststoff-Verbundprodukt gemäß beliebigen der vorhergehenden Ansprüche, wobei es sich bei dem Produkt (11) um ein Bauelement handelt, wie etwa ein Bodenbelagsbrett oder ein Fassadenpaneel; ein Geländer oder einen Zaun; einen Deckstreifen; oder eine Lärmschutzwand handelt.

16. Naturfaser/Kunststoff-Verbundprodukt gemäß beliebigen der vorhergehenden Ansprüche, wobei der Gehalt an Lignin in der ersten Schicht (12) geringer als 1 Gew.-% ist und der Gehalt des Lignins in der zweiten Schicht (13) mindestens 3 Gew.-% beträgt.

17. Verfahren zur Herstellung eines Naturfaser/Kunststoff-Verbundprodukts, das eine erste Schicht (12) und eine zweite Schicht (13) umfasst, wobei die erste Schicht (12) mindestens einen Teil der Oberfläche des Produkts (11) ausmacht, wobei das Verfahren Folgendes umfasst:
- Anwenden eines Koextrusionsverfahrens, um die erste Schicht (12) und die zweite Schicht (13) des Produkts (11) zu bilden,
- Bilden der ersten Schicht (12) des Produkts (11), wobei die erste Schicht (12) ein thermoplastisches Polymermaterial und Cellulosefasern mit einer Länge von mindestens 0,1 mm umfasst, und
- Bilden der zweiten Schicht (13) des Produkts (11), wobei die zweite Schicht (13) ein thermoplastisches Polymermaterial und Partikel auf Cellulosebasis umfasst, **dadurch gekennzeichnet, dass** die zweite Schicht (13) weiterhin Verunreinigungen umfasst, die aus wiederverwertetem/wiederverwerteten Material(ien) stammen und Lignin, Druckfarbe, Silikon und Klebstoffe umfassen,
wobei der Gehalt der Verunreinigungen in der zweiten Schicht (13) um mindestens 30 Gew.-% größer als in der ersten Schicht (12) des Produkts (11) ist, und der Gehalt des Lignins in der ersten Schicht (12) weniger als 15 Gew.-% beträgt, wenn die Berechnung ausgehend von der Gesamtmenge an Cellulosefasern erfolgt.

18. Verfahren nach Anspruch 17, wobei die zweite Schicht mindestens 1 Gew.-%, insbesondere mindestens 2 Gew.-% und mit dem größten Vorzug mindestens 3 Gew.-% an Lignin umfasst.

19. Verfahren nach Anspruch 17 oder 18, wobei der Gehalt an Lignin in der ersten Schicht (12) geringer als 1 Gew.-% ist und der Gehalt des Lignins in der zweiten Schicht (13) mindestens 3 Gew.-% beträgt.

20. Verwendung des Naturfaser/Kunststoff-Verbundprodukts gemäß beliebigen der vorhergehenden Ansprüche 1 bis 16 in einer Terrasse oder einem Gebäude.

21. Gebäude, welches das Naturfaser/Kunststoff-Verbundprodukt (11) gemäß beliebigen der vorhergehenden Ansprüche 1 bis 16 und ein Befestigungsmittel (21) umfasst, wobei der Naturfaser/Kunststoff-Verbund durch das Befestigungsmittel (21) befestigt ist, um einen Teil des Gebäudes zu bilden.

22. Terrasse, welche das Naturfaser/Kunststoff-Verbundprodukt (11) gemäß beliebigen der vorhergehenden Ansprüche 1 bis 16 und ein Befestigungsmittel (21) umfasst, wobei der Naturfaser/Kunststoff-Verbund durch das Befestigungsmittel (21) befestigt ist, um einen Teil der Terrasse zu bilden.

23. Anordnung, welche das Naturfaser/Kunststoff-Verbundprodukt (11) gemäß beliebigen der vorhergehenden Ansprüche 1 bis 16, ein Befestigungsmittel (21), ein Befestigungsglied (22) und ein Basiselement (23) umfasst, wobei das Naturfaser/Kunststoff-Verbundprodukt (11) durch das Befestigungsglied (22) und das Befestigungsmittel (21) an dem Basiselement (23) befestigt ist, wobei das Befestigungsmittel (21) einen Kopf (21b) umfasst und der Kopf (21b) zu einer Oberfläche des Produkts (11) parallel ist.

## Revendications

1. Produit composite de plastique et de fibres naturelles (11) comprenant une première couche (12) et une seconde couche (13), la première couche (12) formant au moins une partie de la surface du produit (11), où le produit est obtenu en utilisant un procédé de co-extrusion pour former la première couche (12) et la seconde couche (13) du produit (11), et où
- la première couche (12) comprend un polymère thermoplastique et des particules à base de cellulose sous la forme de fibres ayant une longueur d'au moins 0,1 mm,
- la seconde couche (13) comprend un polymère thermoplastique et des particules à base de cellulose, **caractérisé en ce que** la seconde couche (13) comprend en outre des impuretés provenant de matériau(x) recyclé(s) et comprenant de la lignine, une encre d'impression, de la silicone et des adhésifs, où la quantité des impuretés est au moins 30 % en poids supérieure dans la seconde couche (13) du produit (11) que dans la première couche (12) du produit (11), où la teneur de la lignine dans la première couche (12) calculée à partir de la quantité totale de fibres de cellulose est de moins de 15 % en poids.

2. Produit composite de plastique et de fibres naturelles selon la revendication 1, dans lequel la seconde couche comprend au moins 1 % en poids, davantage de préférence au moins 2 % en poids et de préférence entre toutes au moins 3 % en poids de lignine.

3. Produit composite de plastique et de fibres naturelles selon la revendication 1 ou 2, dans lequel la première couche (12) comprend moins de 5 % en poids d'impuretés.

4. Produit composite de plastique et de fibres naturelles selon l'une quelconque des revendications précédentes, dans lequel les impuretés sont constituées de lignine(s), d'encre(s) d'impression, de silicone(s) et d'adhésif(s).

5. Produit composite de plastique et de fibres naturelles selon l'une quelconque des revendications précédentes, dans lequel les particules à base de cellulose dans la seconde couche (13) comprennent de la poussière de bois et/ou de la pâte mécanique.

6. Produit composite de plastique et de fibres naturelles selon l'une quelconque des revendications précédentes, dans lequel la teneur de lignine de la première couche (12) est inférieure à 3 % en poids.

7. Produit composite de plastique et de fibres naturelles selon l'une quelconque des revendications précédentes, dans lequel la première couche (12) comprend de 20 à 80 % en poids de polymères thermoplastiques, de 5 à 80 % en poids de particules à base de cellulose, et de 0 à 20 % en poids de charges minérales, la teneur totale desdits matériaux étant au moins 90 % en poids de la première couche (12).

8. Produit composite de plastique et de fibres naturelles selon l'une quelconque des revendications précédentes, dans lequel la première couche comprend du talc.

9. Produit composite de plastique et de fibres naturelles selon l'une quelconque des revendications précédentes, dans lequel au moins 90 % en poids des particules à base de cellulose dans la première couche (12) sont des particules traitées chimiquement.

10. Produit composite de plastique et de fibres naturelles selon l'une quelconque des revendications précédentes, dans lequel au moins 30 % en poids des particules à base de cellulose dans la première couche (12) sont des particules de bois.

11. Produit composite de plastique et de fibres naturelles selon l'une quelconque des revendications précédentes, dans lequel l'épaisseur (12a) de la première couche (12) est entre 0,3 et 5 mm.

12. Produit composite de plastique et de fibres naturelles selon l'une quelconque des revendications précédentes, dans lequel l'épaisseur (13a) de la seconde couche (13) est entre 0,5 et 40 mm.

13. Produit composite de plastique et de fibres naturelles selon l'une quelconque des revendications précédentes, dans lequel le polymère thermoplastique comprend une polyoléfine.

14. Produit composite de plastique et de fibres naturelles selon l'une quelconque des revendications précédentes, dans lequel la longueur du produit (11) est au moins 10 fois supérieure à l'épaisseur du produit (11).

15. Produit composite de plastique et de fibres naturelles selon l'une quelconque des revendications précédentes, dans lequel le produit (11) est un élément de construction, tel qu'un panneau ou un panneau de façade ; une rambarde ou une barrière ; une bande de protection ; ou une barrière contre le bruit.

16. Produit composite de plastique et de fibres naturelles selon l'une quelconque des revendications précédentes, dans lequel la teneur de lignine dans la première couche (12) est inférieure à 1 % en poids et la teneur de lignine dans la seconde couche (13) est d'au moins 3 % en poids.

17. Procédé de fabrication d'un produit composite de plastique et de fibres naturelles comprenant une première couche (12) et une seconde couche (13), la première couche (12) formant au moins une partie de la surface du produit (11), où le procédé comprend :
- l'utilisation d'un procédé de co-extrusion pour former la première couche (12) et la seconde couche (13) du produit (11),
- la formation de la première couche (12) du produit (11), la première couche (12) comprenant un matériau de polymère thermoplastique et des fibres de cellulose ayant une longueur d'au moins 0,1 mm, et
- la formation de la seconde couche (13) du produit (11) où la seconde couche (13) comprend un matériau de polymère thermoplastique et des particules à base de cellulose, **caractérisé en ce que** la seconde couche (13) comprend en outre des impuretés provenant de matériau(x) recyclé(s) et comprenant de la lignine, une encre d'impression, de la silicone et des adhésifs,
où la teneur des impuretés est au moins 30 % supérieure dans la seconde couche (13) que dans la première couche (12) du produit (11), et la teneur de la lignine dans la première couche (12) calculée à partir de la quantité totale des fibres de cellulose est de moins de 15 % en poids.

18. Procédé selon la revendication 17, dans lequel la seconde couche comprend au moins 1 % en poids, davantage de préférence au moins 2 % en poids et de préférence entre toutes au moins 3 % en poids de lignine.

19. Procédé selon la revendication 17 ou 18, dans lequel la teneur de lignine de la première couche (12) est inférieure à 1 % en poids et la teneur de la lignine dans la seconde couche (13) est d'au moins 3 % en poids.

20. Utilisation du produit composite de plastique et de fibres naturelles selon l'une quelconque des revendications précédentes 1 à 16 dans une terrasse ou une construction.

21. Construction comprenant le produit composite de plastique et de fibres naturelles (11) selon l'une quelconque des revendications précédentes 1 à 16, et un moyen de fixation (21), où le produit composite de plastique et de fibres naturelles est fixé par le moyen de fixation (21) pour former une partie de la construction.

22. Terrasse comprenant le produit composite de plastique et de fibres naturelles (11) selon l'une quelconque des revendications précédentes 1 à 16, et un moyen de fixation (21), où le produit composite de plastique et de fibres naturelles est fixé par le moyen de fixation (21) pour former une partie de la terrasse.

23. Disposition comprenant le produit composite de plastique et de fibres naturelles (11) selon l'une quelconque des revendications précédentes 1 à 16, un moyen de fixation (21), un membre de fixation (22) et un élément de base (23), où le produit composite de plastique et de fibres naturelles (11) est fixé à l'élément de base (23) par le membre de fixation (22) et le moyen de fixation (21), où le moyen de fixation (21) comprend une tête (21b), et la tête (21b) est parallèle à une surface du produit (11).
